Europäisches Patentamt

(19) European Patent Office (11) Numéro de publication : **0 109 908**

Office européen des brevets **B1**

(12) **FASCICULE DE BREVET EUROPÉEN**

(45) Date de publication du fascicule du brevet :
02.03.88

(51) Int. Cl.⁴ : **B 29 C 39/02,** E 04 D 3/32,
E 04 F 13/18

(21) Numéro de dépôt : **83402234.5**

(22) Date de dépôt : **21.11.83**

(54) Procédé de moulage de module de recouvrement de toits et de façades et le module ainsi obtenu.

(30) Priorité : 22.11.82 FR 8219488

(43) Date de publication de la demande :
30.05.84 Bulletin 84/22

(45) Mention de la délivrance du brevet :
02.03.88 Bulletin 88/09

(84) Etats contractants désignés :
BE DE GB IT NL

(56) Documents cités :
FR-A- 1 508 556
FR-A- 1 564 257
FR-A- 2 028 689
FR-A- 2 242 148
FR-A- 2 502 669
FR-A- 2 522 348
GB-A- 1 404 934
LU-A-   42 767
US-A- 4 343 126

(73) Titulaire : **Biraben, Roger**
**Les Coustéres**
**F-65100 Lourdes (FR)**

(72) Inventeur : **Biraben, Roger**
**Les Coustéres**
**F-65100 Lourdes (FR)**

(74) Mandataire : **Epstein, Henri**
**18 Résidence La Gaillarderie**
**F-78590 Noisy-le-Roi (FR)**

## Description

La présente invention se rapporte aux modules pour le recouvrement de toits et de façades, qui sont constitués par des pièces moulées imitant par des empreintes plusieurs rangées successives d'éléments traditionnels, tels que ardoises, tuiles, pierres ou autres matériaux de parement.

De telles pièces moulées sont des modules de grande ou moyenne dimension, qui par assemblage reconstituent très fidèlement une toiture, par exemple d'ardoises épaisses montées à l'ancienne ou des éléments de bardage.

Pour respecter l'aspect de couvertures traditionnelles, l'assemblage de telles pièces par leurs bords latéraux et longitudinaux, par exemple par superposition de leurs bords, présente des difficultés. Pour des toitures couvertes d'ardoises montées à l'ancienne, lorsqu'il se produit une déformation de la charpente au cours des années, l'alignement vertical et horizontal des ardoises s'en trouve affecté. Etant donné la multiplication de défauts d'alignement pour de telles toitures, l'esthétique de l'ensemble n'en souffre pas, car ces défauts sont dispersés et présentent une répétition statistique. Il en est tout autrement lors de l'emploi de grands modules de recouvrement. De tels modules présentent à la jonction des défauts linéaires visibles de loin dus soit au baillement des jointures, soit aux surépaisseurs qui marquent la ligne de jonction. Ces défauts n'ont pas seulement des conséquences sur le plan esthétique, mais provoquent des infiltrations d'eau. On peut dire d'une façon générale, qu'aucun des modules décrits dans l'art antérieur n'allie les qualités mécaniques et esthétiques aux qualités de bonne étanchéité.

De par ses travaux antérieurs, l'auteur de la présente invention a eu connaissance d'un procédé de moulage par coulée ou projection d'un module de recouvrement de toits et de façades constitué par une pièce moulée imitant par des empreintes plusieurs rangées successives d'éléments, tels que ardoises, tuiles, pierres ou autres matériaux de parement, les éléments d'une rangée étant décalés horizontalement par rapport aux éléments de la rangée voisine, apte à être assemblé aux modules adjacents par superposition des bords munis de bordures ou joues d'épaisseur réduite par rapport à celle de la partie centrale du module munie d'empreintes.

Le moule utilisé selon cette technique comportait une partie centrale munie d'empreintes bordée d'une bande longitudinale et d'une bande latérale à fonds surélevés. On obtenait de cette façon un module constitué par une pièce moulée imitant par des empreintes plusieurs rangées successives d'éléments, tels que ardoises, tuiles, pierres ou autres matériaux de parement. La présente invention a pour but de perfectionner une telle technique et, tout particulièrement, d'obtenir des modules de recouvrement présentant une esthétique impeccable, lors de l'assemblage, et dont la fabrication ne nécessite pas de contremoulage.

L'invention a pour objet un procédé de moulage par coulée ou par projection, éventuellement avec projection simultanée de fibres, d'un module de recouvrement de toits et de façades constitué par une pièce moulée imitant par des empreintes plusieurs rangées successives d'éléments, tels que ardoises, tuiles, pierres ou autres matériaux de parement, les éléments d'une rangée étant décalés horizontalement par rapport aux éléments de la rangée voisine, apte à être assemblé aux modules adjacents par superposition des bords munis de bordures ou joues d'épaisseur réduite par rapport à celle de la partie centrale du module munie d'empreintes.

Ce procédé est caractérisé en ce qu'on remplit d'un mélange de résine thermodurcissable contenant des charges un moule à ras bords, dont la partie centrale munie d'empreintes en relief négatif est bordée des deux bandes à fond surélevé, l'une sur le côté longitudinal et l'autre sur le côté latéral, on nivelle au moyen d'un outil approprié, tel qu'un rouleau, réglette ou autre, la surface du moule ainsi rempli, on répand par projection sur toute l'étendue du moule des fibres courtes de verre imprégnées de résine et on procède à la cuisson du moule jusqu'au durcissement de la résine.

Pour faciliter le démoulage, on enduit préalablement toute la surface du moule d'un gel-coat.

Après le remplissage du moule, de préférence par projection, on élimine les bulles d'air incluses dans la masse, par exemple au moyen de rouleaux cannelés.

La composition du mélange de résine peut varier entre de larges limites, par exemple entre 5 et 60 % de résine, le reste étant constitué par des charges minérales et des fibres de verre.

De préférence, on utilisera un mélange de 40 % de résine polyester et de 60 % de charges minérales. D'autres résines, telles que résines phénoliques, furaniques et époxy conviennent également.

L'invention a également pour objet un moule adapté pour la mise en œuvre d'un tel procédé et qui comporte une partie centrale munie d'empreintes bordée d'une bande longitudinale et d'une bande latérale à fonds surélevés, caractérisé en ce que la face supérieure de la paroi latérale bordant le moule se situe dans deux plans différents, la paroi latérale bordant la bande latérale présentant une hauteur supérieure à celle de la paroi restante du moule et en ce que le fond de la bande longitudinale est en contre-bas par rapport au fond de la bande latérale, de façon à ce que la profondeur de remplissage des deux bandes soit sensiblement la même et, cependant, le volume de la bande latérale soit décalé verticalement par rapport à celui de la bande longitudinale.

Le moule présente de préférence dans les bordures latérale et longitudinale des empreintes destinées à former des orifices pour le cloutage du module sur un liteaunage.

Selon une forme de réalisation avantageuse, le fond de la bande latérale du moule présente une série d'empreintes longitudinales parallèles pour faciliter l'écoulement d'eau.

L'invention a également pour objet le module pour le recouvrement de toits et de façades obtenu par application du procédé utilisant le moule précité et constitué par une pièce moulée imitant par des empreintes plusieurs rangées successives d'éléments, tels que ardoises, tuiles, pierres ou autres matériaux de parement, lequel module est caractérisé en ce qu'il présente deux bordures ou joues, l'une longitudinale pour l'assemblage longitudinal des modules et l'autre latérale pour l'assemblage latéral des modules, les deux bordures étant formées par des lames minces d'épaisseur sensiblement égale, la bordure latérale étant décalée en contre-bas par rapport à la bordure longitudinale et par rapport au plan de la face interne du moule, le décalage entre les deux plans étant de l'ordre de l'épaisseur d'une bordure.

D'autres particularités de l'invention apparaîtront à la lumière de la description d'un exemple de réalisation d'un module pour le recouvrement de toit, qui suit, illustré par les dessins, dont

la figure 1 présente une vue de dessus d'un moule selon l'invention

les figures 2,3 et 4 représentent respectivement des coupes selon A-A, B-B et C-C de la figure 1

la figure 5 une vue de dessus du module obtenu

la figure 6 et la figure 7 représentent respectivement une vue latérale et une vue de face du module.

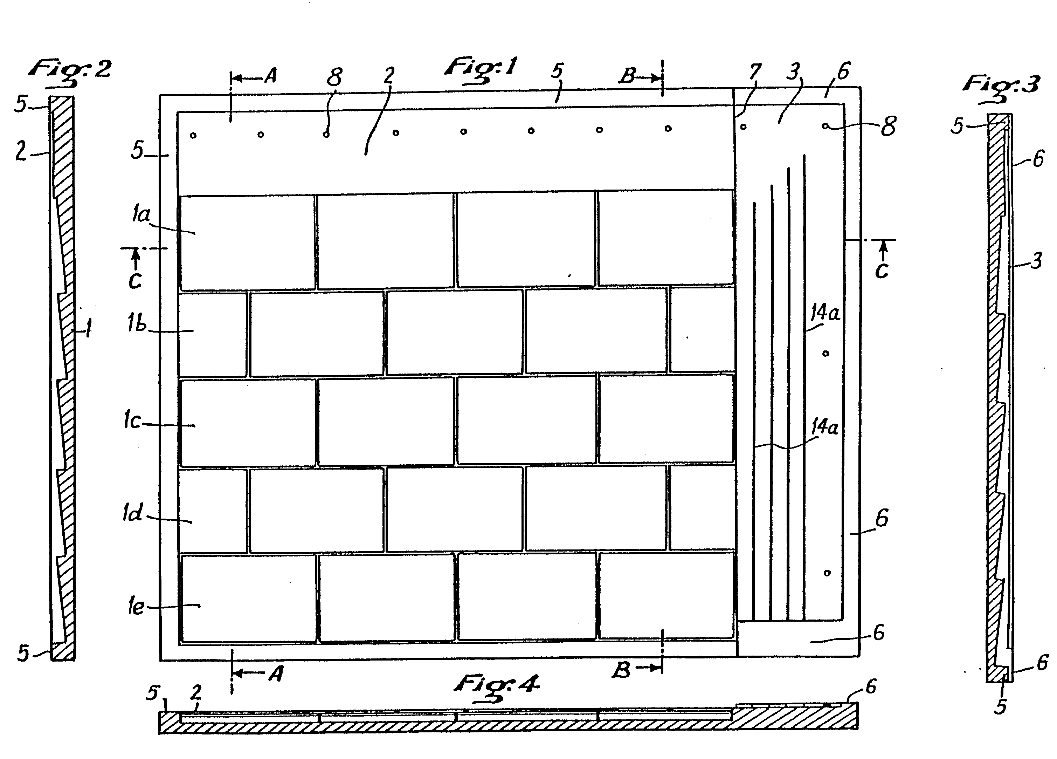

Le moule représenté aux figures 1,2 et 3 est constitué par un fond 1 dont la partie centrale est munie d'empreintes des cinq rangées 1a, 1b, 1c, 1d et 1e d'ardoises. Sur ses deux côtés sont représentées deux bandes pour la formation des bordures du module servant à l'assemblage des modules entre eux, et notamment la bande 2 pour la formation de la bordure longitudinale servant à l'assemblage des modules dans le sens de la pente du toit et la bande 3 pour la formation de la bordure latérale servant à l'assemblage latéral des modules.

Le fond 1 est bordé par des parois latérales du moule, notamment les parois 5 bordant tout le pourtour du moule à l'exception de la bande 3, dont les parois 6 sont plus hautes que les parois 5. Le fond de la bande 3 est surélevé par rapport à celui de la bande 2 et notamment de l'épaisseur d'une bordure. Cette différence de niveau est représentée par le trait 7.

Les hauteurs de remplissage des bandes 2 et 3 sont sensiblement égales, mais le plan de la bande 2 se trouve décalé en contre-bas de celui de la bande 3. Ainsi, grâce au dimensionnement de parois latérales du moule et à la différence de niveau que présentent les deux bandes, on obtiendra au cours du moulage le décalage de la bordure formée sur la bande 3 en contre-bas de celle formée par la bande 2, les deux bordures gardant la même épaisseur et la valeur du décalage sera l'épaisseur d'une bordure.

La bande latérale 3 présente des empreintes de saignées longitudinales 14a. En outre, le moule présente des empreintes ou des inserts 8 répartis le long des bandes 2 et 3.

Selon l'exemple illustrant l'invention, on a choisi un moule dont la partie munie d'empreintes mesure 1/3 m², la largeur des bandes 2 et 3 étant de 120 mm et leur profondeur de remplissage, de même que le décalage entre le plan de la bande 3 et celui de la bande 2, étant d'environ 2 mm.

Le moule peut être en matière quelconque, par exemple en plastique ou en élastomère. De préférence, on utilisera un moule en aluminium, qui est particulièrement avantageux en raison de sa résistance à l'usure et de fidélité de reproduction du relief.

Le mélange employé contient 40 % de résine polyester, la charge étant constituée par des fines particules minérales, telles que sable, poudre d'ardoise ou de brique et des fibres courtes ou des mats de fibres de verre.

La première opération consiste à revêtir toute la surface du moule de gel-coat. Ensuite, on remplit par projection le moule du mélange de résine et de charges et on égalise le niveau de remplissage du moule au moyen d'une réglette. On procède au débullage au moyen de rouleaux cannelés. La dernière opération consiste à projeter à la surface des fibres de verre courtes imprégnées de résine. La cuisson a lieu dans un four tunnel à une température entre 60 et 90 °C.

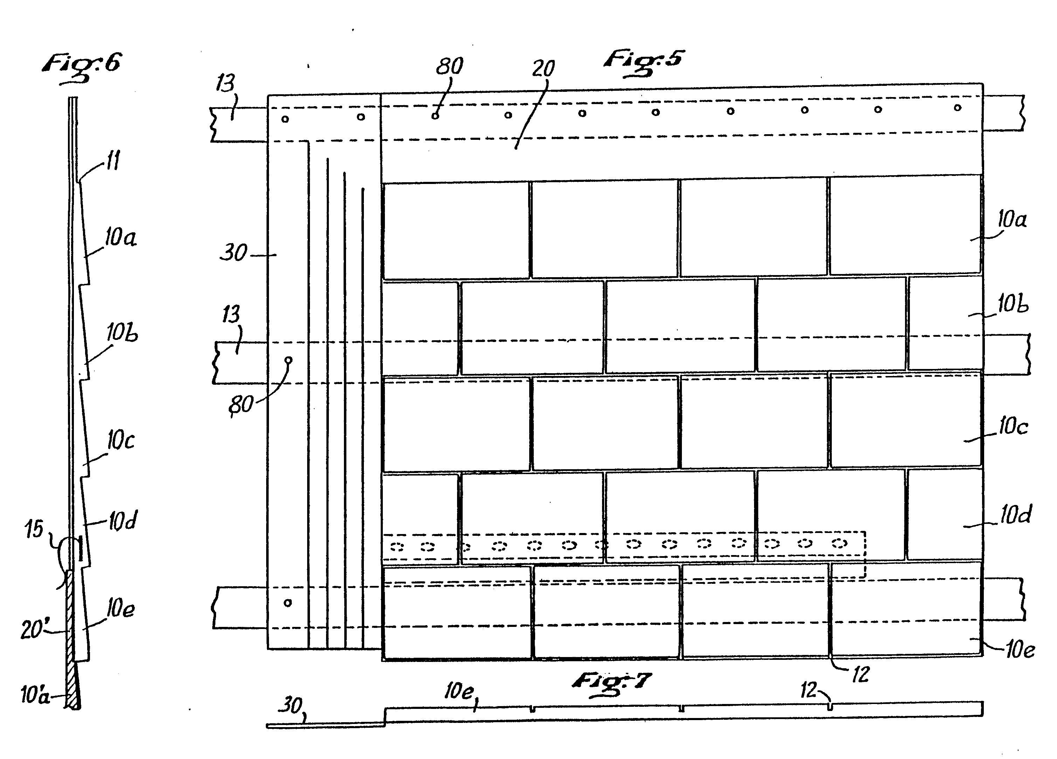

Le module obtenu représenté aux figures 5,6 et 7 comprend une partie centrale munie d'empreintes imitant des rangées successives d'ardoises 10a, 10b, 10c, 10d et 10e, dans chaque rangée les ardoises étant délimitées par des saignées 12. Vue de profil, chaque ardoise présente un nez surélevé à sa partie antérieure et un talon terminant la pente.

L'assemblage de modules s'effectue par superposition des bordures 20 et 30. Pour l'assemblage longitudinal dans le sens de la pente du toit, la rangée 10e d'un module viendra recouvrir la bordure longitudinale 20 du module adjacent. Comme représenté au bas de la figure 6, la bordure 20' d'épaisseur d'environ 2 mm, adjacente à la dernière rangée 10a' d'un module voisin, est recouverte par la rangée 10e du module. De préférence, le talon 11 des ardoises de cette dernière rangée 10a' sera légèrement surélevé par rapport aux talons des autres rangées du même module, de façon à rendre invisible la ligne de jonction des deux modules.

En ce qui concerne l'assemblage latéral, la bordure 30, munie de saignées 14 pour faciliter l'écoulement d'eau, se trouvant décalée en contre-bas par rapport au plan de la face interne du moule, et notamment au plan de celle des ardoises d'extrémités du module voisin, aucune surépaisseur à l'endroit de la jonction ne sera visible et l'ensemble donnera l'aspect homogène d'un toit d'ardoises posé à l'ancienne.

Des liteaux représentés en 13 serviront de fixations par cloutage des modules à l'endroit des orifices 80 réalisés au cours du moulage.

Lorsque le besoin se présente, un bon assemblage longitudinal de modules peut être favorisé par la pose au cours du moulage d'une baguette profilée 15, qui ancrée par une de ses extrémités dans la masse au dos de la partie centrale du module, par exemple à la hauteur de la rangée 10d, viendra pincer sur environ deux tiers de sa longueur la bordure longitudinale 20' du module adjacent, sur laquelle repose la dernière rangée 10e du module représenté.

En dehors de la solution heureuse apportée aux problèmes liés à l'aspect esthétique du toit ou façade réalisés à l'aide de modules ainsi conçus, l'invention présente un intérêt tout particulier du fait de sa réalisation sans utilisation d'un contre-moule, matrice ou autre moyen de réaliser une empreinte au dos du module. La réalisation d'un dos du module se présentant sous la forme des deux plans décalés l'un par rapport à l'autre d'une épaisseur de bordure n'en nécessite aucun. Cette façon de procéder permet d'éviter de gros investissements en matériel. Un simple rouleau de nivellement permet de réaliser une telle face arrière du module composée des deux faces planes. Seul le décalage, tel que réalisé, permet, tout en se passant d'un contre-moule, d'utiliser des bordures au moment d'assemblage sans créer des discontinuités apparentes.

L'invention n'est pas limitée au mode de réalisation décrit, elle peut revêtir d'autres formes, notamment en ce qui concerne la forme géométrique de modules, la forme et l'agencement des empreintes imitant les divers matériaux de parement ou leurs moyens de fixation et d'assemblage.

**Revendications**

1. Procédé de moulage par coulée ou projection, éventuellement avec projection simultanée de fibres, d'un module de recouvrement de toits et de façades constitué par une pièce moulée imitant par des empreintes plusieurs rangées successives d'éléments (10a, 10b, 10c, 10d, 10e), tels que ardoises, tuiles, pierres ou autres matériaux de parement, les éléments d'une rangée étant décalés horizontalement par rapport aux éléments de la rangée voisine, apte à être assemblé aux modules adjacents par superposition des bords munis de bordures ou joues d'épaisseur réduite par rapport à celle de la partie centrale du module munie d'empreintes, caractérisé en ce qu'on remplit d'un mélange de résine thermodurcissable contenant des charges un moule à ras bords, dont la partie centrale munie d'empreintes (1a, 1b, 1c, 1d, 1e) en relief négatif est bordée des deux bandes à fonds surélevés, l'une sur le côté longitudinal (2) et l'autre sur le côté latéral (3), on nivelle au moyen d'un outil approprié, tel qu'un rouleau, réglette ou autre, la surface du moule ainsi rempli, on répand par projection sur toute l'étendue du moule des fibres courtes de verre imprégnées de résine et on procède à la cuisson du moule jusqu'au durcissement de la résine.

2. Procédé selon la revendication 2, caractérisé en ce qu'on enduit préalablement toute le surface du moule d'un gel-coat.

3. Procédé selon l'une des revendications 1 ou 2, caractérisé en ce qu'après le remplissage du moule on procède à l'élimination de bulles d'air incluses dans la masse au moyen d'outils appropriés, tels que des rouleaux cannelés.

4. Procédé selon la revendication 1, caractérisé en ce que la composition du mélange comprend environ 40 % de résine polyester et 60 % de charges minérales et de fibres de verre.

5. Moule adapté pour la mise en œuvre du procédé selon l'une des revendications 1 à 4, comportant une partie centrale munie d'empreintes (1a, 1b, 1c, 1d, 1e) bordée d'une bande longitudinale (2) et d'une bande latérale (3) à fonds surélevés, caractérisé en ce que la face supérieure de la paroi latérale bordant le moule se situe dans deux plans différents, la paroi latérale (6) bordant la bande latérale (3) présentant une hauteur supérieure à celle de la paroi restante (5) du moule et en ce que le fond de la bande longitudinale (2) est en contre-bas par rapport au fond de la bande latérale (3), de façon à ce que la profondeur de remplissage des deux bandes soit sensiblement la même et, cependant, le volume de la bande latérale soit décalé verticalement par rapport à celui de la bande longitudinale.

6. Moule selon la revendication 5, caractérisé en ce que le fond de la bande latérale (3) du moule présente une série d'empreintes longitudinales parallèles (14a).

7. Moule selon la revendication 5, caractérisé en ce qu'il présente dans les bordures latérale et longitudinale des empreintes (8) destinées à former des orifices pour le cloutage du module sur un liteaunage.

8. Module pour le recouvrement de toits et de façades obtenu par application du procédé selon l'une des revendications 1 à 4 au moyen du moule selon l'une des revendications 5 à 7, constitué par une pièce moulée imitant par des empreintes plusieurs rangées successives d'éléments (10a, 10b, 10c, 10d, 10e), tels que ardoises, tuiles, pierres ou autres matériaux de parements, caractérisé en ce qu'il présente deux bordures ou joues, l'une longitudinale (20) pour l'assemblage longitudinal des modules et l'autre latérale (30) pour l'assemblage latéral des modules, les deux bordures étant formées par des lames minces d'épaisseur sensiblement égale, la bordure latérale étant décalée en contrebas par rapport à la bordure longitudinale et par rapport au plan de la face interne du moule, le décalage entre les deux plans étant de l'ordre de l'épaisseur d'une bordure.

9. Module selon la revendication 8, caractérisé en ce que la face supérieure de la bordure latérale (30) porte des saignées longitudinales parallèles (14) pour faciliter l'écoulement d'eau.

10. Module selon la revendication 8, caractérisé en ce que le talon de la dernière rangée d'empreintes (10e) adjacente à la bordure longitudinale est surélevé par rapport au plan de la face supérieure de cette dernière bordure.

**Claims**

1. A method for the molding by pouring or spraying, possibly with simultaneous spraying of fibers, of a roof and house-front covering unit formed of a molded part which by imprints imitates several successive rows of elements (10a, 10b, 10c, 10d, 10e) such as slates, tiles, stones or other facing materials, the elements of one row being shifted horizontally with respect to the elements of the adjacent row, which is adapted to be assembled to the adjacent units by superimposing the edges provided with rims or cheeks of reduced thickness as compared with that of the central portion of the unit which is provided with imprints, characterized by introducing a mixture of thermosetting resin containing fillers into a mold until flush with its edge, the central portion of the mold being provided with imprints (1a, 1b, 1c, 1d, 1e) in negative relief and being bordered by two strips having raised bottoms, one on the longitudinal side (2) and the other on the lateral side (3) ; the surface of the mold which has thus been filled is leveled by means of a suitable tool such as a roller, scraper or the like ; short glass fibers impregnated with resin are spread by spraying over the entire mold and the mold is fired until the resin has hardened.

2. A method according to Claim 2, characterized by the fact that the entire surface of the mold is previously coated with a gel coat.

3. A method according to either of Claims 1 and 2, characterized by the fact that after the filling of the mold, air bubbles enclosed within the mass are eliminated by means of suitable tools, such as grooved rollers.

4. A method according to Claim 1, characterized by the fact that the composition of the mixture comprises about 40 % polyester resin and 60 % mineral fillers and glass fibers.

5. A mold suitable for the carrying out of the method according to any of Claims 1 to 4, comprising a central portion provided with imprints (1a, 1b, 1c, 1d, 1e) bordered by a longitudinal strip (2) and a lateral strip (3) having raised bottoms, characterized by the fact that the upper face of the lateral wall bordering the mold is located in two different planes, the lateral wall (6) bordering the lateral strip (3) having a height greater than the height of the remaining wall (5) of the mold, and by the fact that the bottom of the longitudinal strip (2) is recessed with respect to the bottom of the lateral strip (3) so that the depth of filling of the two strips is substantially the same and, however, the volume of the lateral strip is shifted vertically with respect to that of the longitudinal strip.

6. A mold according to Claim 5, characterized by the fact that the bottom of the lateral strip (3) of the mold has a series of parallel longitudinal imprints (14a).

7. A mold according to Claim 5, characterized by the fact that in the lateral and longitudinal rims it has imprints (8) intended to form orifices for the nailing of the unit to a nailing bed.

8. A unit for the covering of roofs and house fronts obtained by the use of the method according to any of Claims 1 to 4 by means of the mold according to any of Claims 5 to 7, consisting of a molded part which by imprints imitates several successive rows of elements (10a, 10b, 10c, 10d, 10e) such as slates, tiles, stones, or other facing materials, characterized by the fact that it has two rims or cheeks, one longitudinal (20) for the longitudinal assembling of the units and the other lateral (30) for the lateral assembling of the units, the two rims being formed by thin blades of substantially equal thickness, the lateral rim being shifted downward with respect to the longitudinal rim and with respect to the plane of the inner face of the mold, the distance between the two planes being of the same order as the thickness of a rim.

9. A unit according to Claim 8, characterized by the fact the upper face of the lateral rim (30) bears parallel longitudinal cuts (14) to facilitate the flow of water.

10. A unit according to Claim 8, characterized by the fact that the heel of the last row of imprints (10e) which is adjacent the longitudinal rim is raised as compared with the plane of the upper face of said last rim.

**Patentansprüche**

1. Verfahren zum Formen durch Giessen oder Aufspritzen, eventuell mit gleichzeitiger Aufspritzung von Fasern, eines Verkleidungselementes für Dächer oder Fassaden, das aus einem geformten Teil besteht, das mittels Prägungen mehrere aufeinanderfolgende Reihen von Elementen (10a, 10b, 10c, 10d, 10e) imitiert, wie zum Beispiel Schieferplatten, Dachziegel, Steine oder andere Verkleidungsmaterialien, wobei die Elemente einer Reihe horizontal zur nächsten Reihe von Elementen versetzt sind, und diese Elemente durch Überlagerung der mit Einfassungen oder Wangen reduzierter Dicke im Vergleich zu dem die Prägungen aufweisenden Mittelteil versehenen Ränder mit den benachbarten Verkleidungselementen verbunden werden können, dadurch gekennzeichnet, dass eine Giessform bis zum Rand mit einer warmhärtenden, Füllstoffe enthaltenden Harzmasse gefüllt wird, deren mittlerer, die Prägungen (1a, 1b, 1c, 1d, 1e) im Negativrelief aufweisender Teil von zwei hochgezogenen Banden eingerahmt ist, eine an der Längsseite (2), die andere an der Breitseite (3), und dass dann die Oberfläche der befüllten Giessform mit Hilfe eines geeigneten Werkzeuges, wie zum Beispiel einer Walze, einem Stab od. dgl. geglättet wird und dann über den gesamten Bereich der Giessform kurze, mit Harz getränkte Glasfasern aufgespritzt werden und danach die Giessform im Ofen getrocknet wird, bis das Harz ausgehärtet ist.

2. Verfahren nach Anspruch 1, dadurch gekennzeichnet, dass die gesamte Fläche der Giessform vorher mit einem Gelcoat bestrichen wird.

3. Verfahren nach einem der Ansprüche 1 oder 2, dadurch gekennzeichnet, dass nach Befüllung der Giessform mit Hilfe geeigneter Werkzeuge, zum Beispiel einer Ringelwalze, die in der Masse eingeschlossenen Luftblasen entfernt werden.

4. Verfahren nach Anspruch 1, dadurch gekennzeichnet, dass die verwendete Mischung aus etwa 40 % Polyesterharz und 60 % Füllstoffen und Glasfasern besteht.

5. Geeignete Giessform für die Durchführung des Verfahrens nach einem der Ansprüche 1 bis 4, die einen mit Prägungen (1a, 1b, 1c, 1d, 1e) versehenen Mittelteil aufweist, der von einer Längsbande (2) und einer Seitenbande (3) mit hochgezogenen Böden eingerahmt ist, dadurch gekennzeichnet, dass die Oberseite der die Giessform umfassenden Seitenwand in zwei verschiedenen Ebenen angeordnet ist, wobei die Seitenwand (6), die die Seitenbande (3) einrahmt, eine grössere Höhe aufweist, als die andere Wand (5) der Giessform, und dass der Boden der Längsbande (2) im Vergleich zum Boden der Seitenbande (3) nach unten versetzt ist, so dass die Befüllungstiefe der beiden Banden weitgehend gleich ist, jedoch das Volumen der Seitenbande im Vergleich zu derjenigen der Längsbande vertikal versetzt ist.

6. Giessform nach Anspruch 5, dadurch gekennzeichnet, dass der Boden der Seitenbande (3) der Giessform eine Reihe paralleler Längsprägungen (14a) aufweist.

7. Giessform nach Anspruch 5, dadurch gekennzeichnet, dass sie in den Seiten- und Längsrändern Prägungen (8) aufweist, die dazu bestimmt sind, Öffnungen zu bilden, damit das Verkleidungselement mit Hilfe von Nägeln an Dachlatten befestigt werden kann.

8. Element für die Verkleidung von Dächern und Fassaden, das durch Anwendung des Verfahrens nach einem der Ansprüche 1 bis 4 mit Hilfe der Giessform nach einem der Ansprüche 5 bis 7 hergestellt wird und das aus einem Gussteil besteht, das durch Prägungen mehrere aufeinanderfolgende Reihen von Elementen (10a, 10b, 10c, 10d, 10e), wie zum Beispiel Schieferplatten, Dachziegel, Steine oder andere Verkleidungsmaterialien imitiert, dadurch gekennzeichnet, dass es an seinen Rändern oder Wangen, die eine in Längsrichtung (20) für den Zusammenbau der Elemente in Längsrichtung, die andere in seitlicher Richtung (30) für den seitlichen Zusammenbau der Elemente aufweist, wobei die beiden Ränder durch dünne Kanten weitgehend gleicher Dicke geformt werden, und die Seitenkante im Vergleich zur Längskante und im Vergleich zur Ebene der Innenfläche der Giessform nach unten versetzt ist, wobei der Versatz zwischen beiden Ebenen die Grössenordnung der Dicke eines Randes hat.

9. Verkleidungselement nach Anspruch 8, dadurch gekennzeichnet, dass der Seitenrand (30) parallele Längseinschnitte (14) aufweist, um das Abfliessen von Wasser zu erleichtern.

10. Verkleidungselement nach Anspruch 8, dadurch gekennzeichnet, dass der Absatz der letzten Reihe von Prägungen (10e) am Längsrand im Vergleich zur Ebene der oberen Fläche dieses Randes hochgezogen ist.

Fig.3

Fig.1

Fig.2

Fig.4

Fig.5

Fig.6

Fig.7

10a  10b  10c  10d  10e

12  12  10e  30

20  80  80  30  13  13

11  10a  10b  10c  10d  10e  15  20'  10'a